# EUROPEAN PATENT APPLICATION

(11) **EP 4 015 134 A1**
(43) Date of publication of application: **22.06.2022**
(21) Application number: 20215506.5
(22) Date of filing: 18.12.2020
(51) Int. Cl.: B23K 26/08, B23K 26/14, B23K 26/38, B23K 37/02, B23K 37/04, B23K 101/18

(54) **LASER MACHINING NOZZLE WITH RIBLETS INSIDE, AND LASER CUTTING MACHINE WITH SUCH NOZZLE**

(71) Applicant: Bystronic Laser AG, 3362 Niederönz (CH)
(72) Inventor: BERGER, Michael, 3005 Bern (CH); LÜDI, Andreas, 3400 Burgdorf (CH)
(74) Representative: Frei Patent Attorneys

(57) **Abstract**

The present invention concerns a laser cutting machine with a cutting head that moves relative to a workpiece for making a controlled cut in the workpiece. The cutting head comprises a laser machining nozzle (20) and a gas supply mechanism and is equipped to eject a gas jet from the laser machining nozzle (20) onto the workpiece when the workpiece is supported by the support. The laser machining nozzle (20) has a flow guiding section (21) that is provided with a plurality of riblets (25) that may especially run in an axial direction, i.e. the riblets (25) are parallel to the direction of the fluid flow through the nozzle (20). The riblets (25) make the fluid flow through the nozzle (20) more laminar.

## Description

### FIELD OF THE INVENTION

The invention is in the field of laser cutting of workpieces.

### BACKGROUND OF THE INVENTION

In laser cutting of metal workpieces, a directed laser beam moves relative to the metal workpiece to locally melt the metal material at the position of incidence of the laser beam on the workpiece. This produces a laser cut. Modern laser cutting machines also direct a gas jet onto the position of incidence of the laser beam. The gas jet may assist the removal ("blowing") of molten metal material and/or, if it contains molecular oxygen, may be involved in a chemical reaction ("burning"). Both, the removal and, if applicable, the chemical reaction, help to generate a good cutting kerf.

The performance of laser cutting machines depends from different aspects. Both, the laser beam and the gas jet both belong to the essential properties influencing the performance. Therefore, there exists a large number of publications and considerable patent literature concerning properties of the laser beam and of the gas jet for an optimized cutting performance. Especially, there have been a lot of approaches for improving and tailoring the laser beam. Optimization of the gas jet has so far produced the approach of providing a sleeve at the outlet of the nozzle that directs the gas jet onto the workpiece. As taught in WO2018/177804A1, the sleeve may be made of wear-resistant material and may be brought into direct contact with the workpiece so as to locally confine the gas jet and to thereby prevent an undesired sideways flow and loss of gas, and to produce a laminar flow into the cut. However, this approach suffers from the severe drawback that damages may arise or the workpiece may be displaced in case the workpiece has salient features or unevenness. Also, the required wear-resistant sleeves are expensive.

### SUMMARY OF THE INVENTION

It is an object of the present invention to provide a laser cutting machine overcoming drawbacks of prior art cutting machines and improving the efficiency of the gas flow without suffering from the disadvantages of prior art approaches.

This object is achieved by a laser cutting machine and a laser machining nozzle as defined in the claims.

A laser cutting machine has a cutting head and a workpiece support, for example a working table, on which the workpiece lies. The cutting head and the workpiece support are movable relative to one another, i.e., the machine is equipped for causing a relative movement between the cutting head and the workpiece support. In many embodiments, the workpiece support is fixedly relative to a machine frame and the cutting head is movable, but it is also possible that the cutting head stands still and the workpiece support moves, or that both, the cutting head and the workpiece support move relative to a machine frame. For making a controlled cut in the workpiece a laser beam is emitted and directed onto the workpiece. The cutting head comprises a laser machining nozzle and a gas supply mechanism and is equipped to eject a gas jet from the laser machining nozzle onto the workpiece when the workpiece is supported by the support. The gas jet of the cutting gas assists the cutting process as explained hereinbefore.

The laser machining nozzle has a flow guiding section that is provided with a plurality of riblets. The riblets may run in an axial direction, i.e. the riblets may be parallel to the direction of the fluid flow through the nozzle. Riblets are small ribs - with a height of usually less than 1 mm - parallel to the flow direction.

According to the prior art, the interior walls of gas jet nozzle orifices are made as smooth as possible to make the flow (seemingly) as smooth as possible. For avoiding gas losses and for making the coupling of the gas flow into the cut as efficient as possible, the prior art demands an as small distance between the nozzle outlet orifice and the surface of the workpiece - having the mentioned disadvantages of enhancing the risk of a collision. The present invention in contrast, proposes to use riblets in the orifice.

The effect of riblets is, per se, known from other fields. Structures with riblets have for example been proposed for outer surfaces of airplanes or for other applications where the aerodynamic resistance or water resistance of moving vehicles is to be reduced. Riblets are inspired by structures of the skin of sharks. Although one would intuitively assume that a smooth surface is ideal for achieving a smooth flow, this is not true. It is known and has been empirically confirmed that riblets - small ribs that run parallel to the direction of gas (or liquid) flow - prevent the gas (or liquid) from flowing tangentially and thereby make the flow more laminar.

It has been found by the inventors of the present invention that riblets are useful under the conditions that arise in orifice of a nozzle that ejects a gas stream (gas jet). For example, the wall of the narrowest region of the nozzle - usually most downstream region, adjacent its outlet orifice - is provided with the riblets. Optionally, also other gas conducting regions may comprise riblets.

Especially, the nozzle outlet may be a cylindrical nozzle portion having a mouth at the downstream end (the lower end in most configurations) that constitutes the nozzle outlet orifice. In this, the inner wall of this cylindrical portion may have, with the exception of the riblets, the shape of a circular cylinder. Other cross sections deviating from circular, for example slightly elliptical, are possible for the cylindrical cross portion and not excluded by the definition of the term "cylindrical" as used in the present text. Dimensions of the flow guiding section (i.e. an (average) diameter of the flow guiding section) may range between 0.025 mm and 10 mm, advantageously between 0.6 mm and 8 mm, for example between 0.8 mm and 6 mm. In addition or as an alternative to being dimensions of the flow guiding section, these dimensions may be dimensions of the nozzle's outlet orifice.

The riblets may especially extend as far as the outlet orifice.

The ribets may for example extend along the entire cylindrical portion constituting the flow guiding section. As a further option, they may also extend further into the upstream direction, i.e. for example into a conical portion that is arranged upstream of the cylindrical portion.

The riblets may extend uninterruptedly along an axial length of the flow guiding section. In accordance with an alternative, the riblets may staggered. Then, an axial length of the individual riblets may be smaller than an axial length of the section that comprises the riblets

In a laser cutting device, a laminar flow of the gas jet of cutting gas ejected from a nozzle onto the cutting side with as little as possible tangential flow components has several advantageous properties:
Firstly, it allows to couple gas into the cut with fewer losses compared to the prior art.
Secondly, the gas flow will be less turbulent withing the cut, too. This positively influences the quality of the generated cut, especially by minimizing the roughness and the burr.
Thirdly, a same efficiency of coupling the gas into the cut may be achieved using a less high pressure compared to the prior art. A lower pressure may have an additional positive effect on laminarity.
Fourthly, if reactive gas (such as oxygen) is used as the cutting gas, the laminar flow ensures that the oxidizing gas is brought to the desired position in the cut in a controlled manner. This ensures an additional energy deposition. Further, also this helps improving the quality of the cut, again reducing roughness and burr.

The size, shape and distribution of the riblets may depend on the circumstances, such as the properties of the fluid (gas/liquid; if applicable gas composition), the diameter of the flow guiding section and outlet orifice, the jet velocity etc.

More in concrete, simulations have shown that an ideal riblet structure primarily depends on the flow velocity and the fluid viscosity and also depends on the dimension of the parts flown through. As a tendency, the riblet structures scale with the Reynolds number.

An ideal size, shape and distribution may be determined experimentally and/or by suitable simulations. Suitable shapes especially include riblets with a relatively sharp edge, i.e. the cross section of which ends, towards interiorly, in a distinct tip. For example, the cross section may be triangular.

The arrangements of the riblets may be such that the resulting cross section is different from a sawtooth structure. Rather, extended riblet-less wall potions may be there between the riblets, so that the spacing between neighboring riblets is larger than the width of the riblets and for example also larger than their height (radial extension). Especially, the spacing may be at least 1.5 times or at least two times their width, so that the riblet-free surface portion between neighboring riblets.

Especially, the spacing between the riblets may amount to about 1.5-5, for example between 2-3 times the riblet height, with riblet spacings between 20 µm and 500 µm or 300 µm, for example between 30 µm and 150 µm and riblets heights between 5 µm and 250 µm, for example between 10 µm or 15 µm and 50 µm being ideal.

In this text, generally the direction from which flow flows towards the workpiece (in most cases being identical with the direction from which the cutting beam acts on the workpiece) is denoted as "upstream", whereas the opposing direction is "downstream". Often, the configuration is such that the workpiece lies on a working table, and the cutting beam acts from above. Then, the "upstream" side is the upper side and the "downstream" side is the lower side. The flow axis is the axis of the flow in the nozzle, and directions such as "axial" and "radial" refer to this flow axis.

### BRIEF DESCRIPTION OF THE DRAWINGS

Hereinafter, embodiments of the present invention are described in more detail referring to drawings. The drawings are schematic and not to scale. In the drawings, same reference numbers refer to same or similar components. They show:
- Fig. 1:: A laser cutting machine;
- Fig. 2: A cutting head of a laser cutting machine;
- Fig. 3: A portion of a nozzle comprising riblets;
- Fig. 4: A detail of an inner surface of the nozzle outlet; and
- Figs 5 and 6: Portions of alternative nozzles.

### DESCRIPTION OF THE PREFERRED EMBODIMENTS

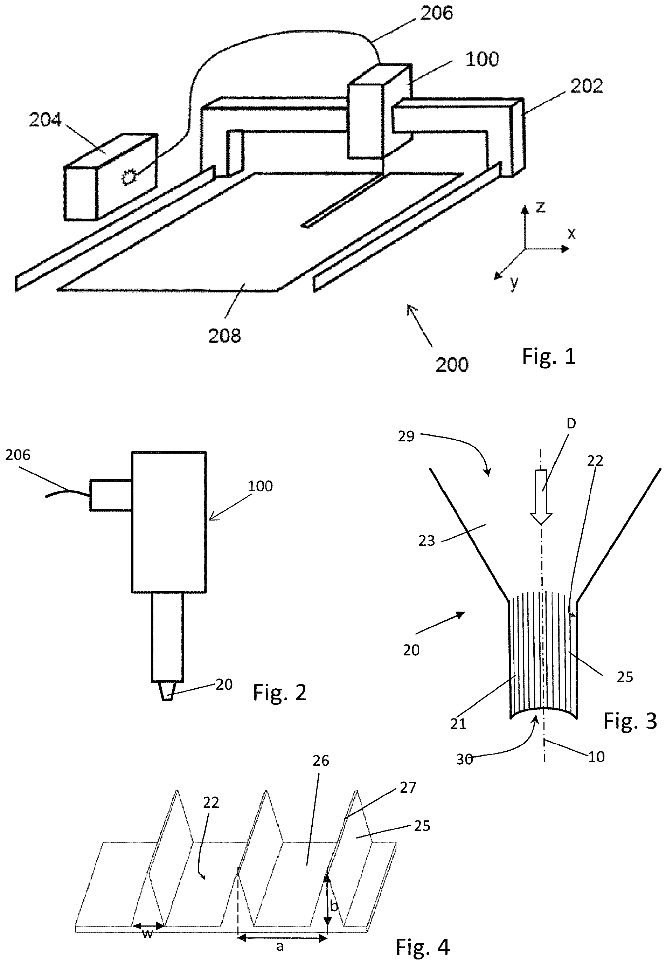

**Figure 1** shows an example of a laser cutting machine 200. The machine comprises a laser radiation source 204, a radiation guide 206 (a fiber or bundle of fibers), a laser cutting head 100, and a laser head moving mechanism. A workpiece 208 is supported by a working table (not shown). The head moving mechanism comprises a bridge 202 relative to which the laser cutting head 100 is movable in x direction (see the depicted coordinate system), and which itself is movable, for example on a pair or rails, in y direction relative to the working table and the workpiece 208. The workpiece 208 may be a metal sheet that is cut by a laser beam emitted by the laser head.

**Figure 2** shows an example of a laser head 100. It comprises at its downstream-most end (the lower end in the depicted orientation in which the laser acts from above the workpiece 208) a laser machining nozzle 20. The laser radiation and the gas flow both are emitted from this end. The laser machining nozzle 20 serves for ejecting the gas flow of the cutting gas.

**Figure 3** schematically shows a detail of the downstream-most part of such a laser machining nozzle 20. The laser machining nozzle 20 defines a flow passage from a nozzle inlet 19 and the nozzle outlet orifice 30 through which a gas flows in the axial direction D of the black arrow. In a flow guiding section 21 near the nozzle outlet orifice 30, the inside of the laser machining nozzle comprises a plurality of riblets 25 projecting radially-inwardly from the inner wall 22. The riblets 25 extend parallel to the axis 10 and hence parallel to the airflow direction. The riblets 25 extend as far as the outlet orifice 30, i.e. as far as the mouth of the cylindrical portion that has the riblets 25.

In the depicted configuration, the riblets 25 extend along the cylindrical portion only, which then constitutes the flow guiding section 21. It is possible, however, that the riblets 25 extend further and extend along at least a lower part of the adjacent conical portion 23. In sections with a not cylindrical inner wall, the (optional, but in many embodiments preferred) condition that the riblets are parallel to the flow direction D means that they extend along the inner wall in in a longitudinal direction (e.g., for every riblet there may a plane that extends both, through the riblet and the flow axis).

**Figure 4** depicts, again schematically, a detail of an inner surface 22 of the nozzle outlet, i.e. of the inner surface of the laser machining nozzle in the flow guiding section, (the surface for illustration purposes is illustrated as flat; in reality it will be the bent to extend around the flow axis 10). The riblets 25 are relatively small, with a height b of typically between 10 µm and 50 µm, a width w that is for example between 0.4 and 2 times its height, and a spacing a of typically between 30 µm and 150 µm. The riblets 25 towards the radially interior side (the upper side in Fig. 4) end in a relatively sharp edge 27. They are shaped and spaced from each other so that a riblet-less surface section 26 extends between mutually neighboring riblets 25.

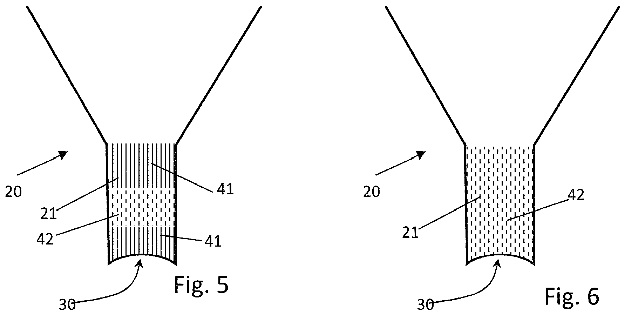

**Figure 5** depicts, in analogy to Fig. 3, an outermost part of an alternative laser machining nozzle 20. In the flow guiding section 21 that extends next to the nozzle outlet orifice 30 and immediately upstream of it, the inside of the laser machining nozzle again comprises riblets. The riblets are arranged in two zones of longer riblets 41 and, between them a zone of short, staggered riblets 42.

**Figure 6** shows another variant with only staggered riblets 42, i.e. the zone of the staggered riblets extends along a full length of the flow guiding section 21.

In general, the arrangement of the riblets 25 as well as their dimensions may be optimized based upon calculations and/or experiments, depending on the nature (chemical composition) and flow of the gas.

For manufacturing the inner surface of the nozzle flow guiding section 21 that comprises the riblets 25, different options exist. A first option is etching. Etching processes have the advantage of being capable of producing structures of almost any complexity, including structures as for example structures of the kind shown in Figures 5 and 6. In an etching process, an etchant is used to remove structures to be removed on a surface in a targeted manner. Such etching process may be used to manufacture a foil. It is possible both, to directly manufacture a foil having the suitable surface structure with the riblets, or to manufacture a negative thereof (i.e. with correspondingly shaped grooves at the locations where the riblets are to be) and to manufacture the desired foil by casting from the negative. Such a foil will then be brought into a hose-like arrangement and then attached to the interior of the nozzle outlet. As an alternative to an etching process, also a (micro-)rolling process or an embossing process may be used for manufacturing a suitable foil or directly the workpiece from which the nozzle/nozzle outlet is made. Also a machining process or a combination of a machining process with a chemical process such as etching is possible.

As a still further alternative, a lacquer coating process as developed, specifically for riblets, by Stenzel et al from the *Fraunhofer-Institut für Fertigungstechnik und Angewandte Materialforschung* IFAM may be used. This process is based on UV curing a lacquer that coats an object while being shaped to comprise the riblets by a UV transparent matrix (silicone mould) carrying a negative of the riblet structure.

## Claims

1. A laser cutting machine (200), comprising a cutting head (100), a laser source (204), and a workpiece support, the machine being equipped for causing a relative movement between the cutting head (100) and the workpiece support and being equipped to emit a laser cutting beam from the cutting head (100) for making a controlled cut in a workpiece (208) supported by the support, the cutting head comprising a laser machining nozzle (20) and a gas supply mechanism and being equipped to eject a gas jet from the laser machining nozzle (20) onto the workpiece supported by the workpiece support, wherein the laser machining nozzle (20) comprises a flow guiding section (21) with an inner wall (22), **characterized in that** the flow guiding section (21) comprises a plurality of riblets (25) projecting from the inner wall (22).

2. The laser cutting machine according to claim 1, wherein the riblets (25) run parallel to a direction (D) of a fluid flow through the flow guiding section (21).

3. The laser cutting machine according to claim 1 or 2, wherein the nozzle (20) has a nozzle outlet orifice (30) through which the gas jet is emitted from the nozzle, and wherein the flow guiding section (21) extends to the laser machining nozzle outlet orifice (30).

4. The laser cutting machine according to any one of the previous claims, wherein the flow guiding section (21) constitutes a narrowest region of the laser machining nozzle (20).

5. The laser cutting machine according to any one of the previous claims, wherein the riblets (25) extend along a full axial length of the flow guiding section (21).

6. The laser cutting machine according to any one of the previous claims, wherein the riblets (25) are arranged in zones (41, 42), the riblets (25) between the different zones being staggered with respect to each other.

7. The laser cutting machine according to any one of the previous claims, wherein the riblets (25) have an inwardly facing edge (27).

8. The laser cutting machine according to claim 7, wherein the riblets (25) are triangular in cross section.

9. The laser cutting machine according to any one of the previous claims, wherein the inner wall (22) comprises riblet-less portions (26) between neighboring riblets (25).

10. The laser cutting machine according to any one of the previous claims, wherein a spacing (a) between neighboring riblets (25) is greater than a height (b) of the riblets.

11. The laser cutting machine according to any one of the previous claims, wherein a height (b) of the riblets (25) is between 10 µm and 250 µm.

12. A laser machining nozzle (20) for a machine according to any one of the previous claims, the laser machining nozzle (20) comprising a flow passage extending between a nozzle inlet (19) an a nozzle outlet orifice (30) from which the fluid is ejected, the laser machining nozzle (20) comprising a flow guiding section (21) of the flow passage, the flow guiding section (21) having an inner wall (22), **characterized in that** the flow guiding section (21) comprises a plurality of riblets (25) projecting from the inner wall (22).

13. The laser machining nozzle according to claim 12, wherein the riblets (25) run parallel to a direction (D) of a fluid flow through the flow guiding section (21).

14. The laser machining nozzle according to claim 12 or 13, wherein the inner wall (22) of the flow guiding section (21) has the shape of a circular cylinder.

15. The laser machining nozzle according to any one of claims 12-14, wherein an average diameter of the flow guiding section is between 0.6 mm and 8 mm.
